# EUROPEAN PATENT APPLICATION

(11) **EP 1 408 485 A2**
(43) Date of publication of application: **14.04.2004**
(21) Application number: 03256195.3
(22) Date of filing: 01.10.2003
(51) Int. Cl.: G11B 5/52

(54) **Head drum assembly for a tape recorder**

(30) Priority: 07.10.2002 KR 2002061088; 24.10.2002 KR 2002065279; 17.12.2002 KR 2002080911; 17.12.2002 KR 2002080912; 14.02.2003 KR 2003009514
(71) Applicant: SAMSUNG ELECTRONICS CO., LTD., Suwon-City, Kyungki-do (KR)
(72) Inventor: Lee, Seung-woo, Paldal-gu, Suwon-city, Gyunggi-do (KR); Hong, Sung-hee, Suwon-city, Gyunggi-do (KR); Kang, Tae-gil, Paldal-gu, Suwon-city, Gyunggi-do (KR); Choi, Do-young, Cheoncheon-dong, Jangan-gu, Suwon-city (KR); Baik, Chung-hum, Paldal-gu, Suwon-city, Gyunggi-do (KR)
(74) Representative: Geary, Stuart Lloyd

(57) **Abstract**

A head drum assembly (200) of a tape recorder in which an inner race and an outer race of an upper bearing (250) are press-fitted onto a shaft (240) and a rotary drum (210), respectively, thereby applying a preload, and comprises preload means including a resilient body (270) such as a compressed coil spring that is disposed between a lower bearing (260) disposed between the rotary drum and the shaft and a stationary drum (220), the resilient body for upwardly pressing the inner race of the lower bearing, thereby applying a preload. Accordingly, the head drum assembly (200) of the tape recorder provides enhanced assembling efficiency and reduced manufacturing costs.

## Description

The present invention relates to a head drum assembly for a tape recorder comprising: a rotary drum and a stationary drum engaged on a shaft; first and second separated bearings connecting the rotary drum to the shaft; and means for preloading the first and second bearings. The invention relates also to methods of assembling a head drum assembly for a tape recorder, the head drum assembly including first and second separated bearings connecting a drum to a shaft.

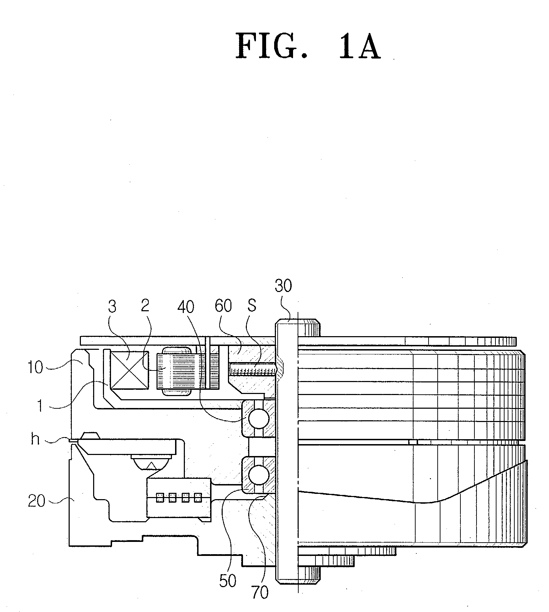

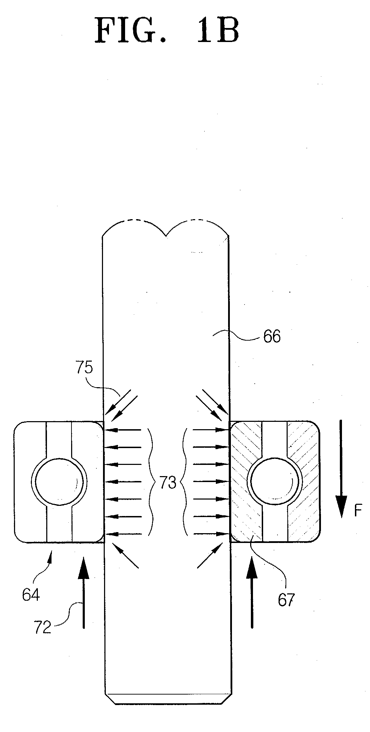

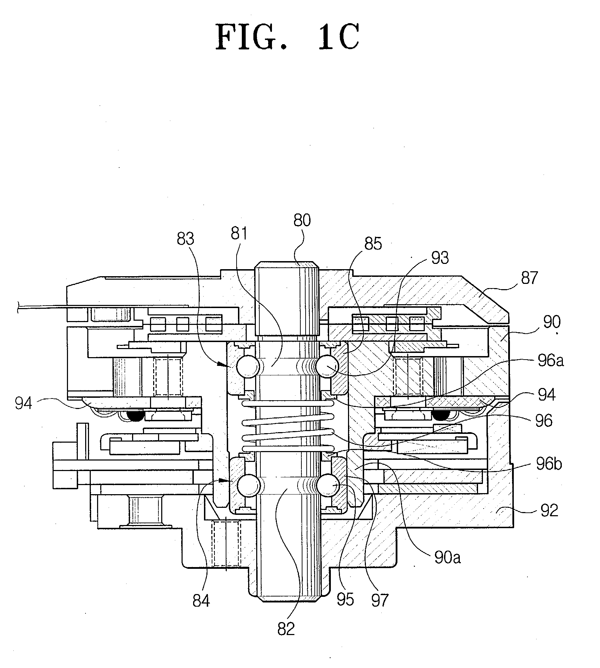

In general, tape recorders such as VCRs and camcorders are provided with a head drum assembly that is mounted for high-speed rotation. This enables information to be recorded and reproduced by the scanning of a magnetic head in relation to a magnetic tape. Figure 1 is a partial cross-sectional schematic view of a head drum assembly. As shown, the head drum assembly comprises: a rotary drum 10, which rotatably supports a magnetic head H for recording/reproducing information by scanning a running magnetic tape; a fixed drum 20, which is press-fitted onto a lower part of a shaft 30 engaged in a central axial bore of the rotary drum 10; an upper bearing 40 and a lower bearing 50 press-fitted between the rotary drum 10 and the shaft 30. An inner race of each bearing 40, 50 is located in the shaft 30 and an outer race of each is press-fitted into the rotary drum 10. A rotor 1 and a stator 2 are arranged relative to a magnet 3, which is mounted on the internal circumferential surface of the rotor 1.

The head drum assembly is provided with preloading means for applying preload to the upper bearing 40 and the lower bearing 50. In particular, a preloading boss 60 is provided above the upper bearing 40, and a rib 70 is provided on the fixed drum 20 below the lower bearing 50. The preloading boss 60 is secured by a set screw S so that a projection formed in the preloading boss 60 downwardly compresses the innermost race 41 of the upper bearing 40. The rib 70 upwardly compresses the inner race 51 of the lower bearing, thereby applying preload to the bearings.

There is a cost involved in providing the preloading boss 60 and the set screw. Also, because it is not easy to determine the position for securing the preloading boss 60 when engaging the set screw S, it is difficult to precisely control the preload. This can lead to the generation of noise while driving the bearings.

Furthermore, to remove thermal deformation caused by the excessive press-fitting of the bearings, it is required that the head drum assembly be subjected to a heat treatment process (such as annealing) after the bearings are assembled. This step reduces the manufacturing yield.

Figure 1B shows residual stress exerted in a bearing assembly mounted in a head drum assembly of a tape recorder. Referring to Figure 1B, when a lower bearing 64 is press-fitted onto a central shaft 66 in the direction given by the arrow 72, a force F is exerted opposite to the press-fitting direction 72. Accordingly, there remain the repulsive forces inside the central shaft 66 which tend to push the lower bearing 64 outward from the central shaft 66, and also the residual stresses that are exerted in the direction of the arrow 72 to push an inner race 67 of the lower bearing 64 downwardly. The repulsive forces 73 are particularly concentrated between the central shaft 66 and the inner race 67 of the lower bearing 64, and the oblique residual stress 75 is much more concentrated at an upper side of the lower bearing 64 than a lower side. These concentrated forces act on the inner race 67 downwardly and twist the central shaft 66. The initial assembling position can be minutely changed due to excessive stresses caused by long use, high speed rotation, and thermal deformation. As a result, the precise assembling of the bearing assembly cannot be guaranteed, which is a critical disadvantage especially in the field of precision instruments, which are highly sensitive to height variation of the bearing.

Figure 1C shows another head drum assembly mounted in a compact-size tape recorder such as a DVC (Digital Video Camera). For compactness, the head drum assembly of Figure 1C has so-called direct bearings 83 and 84, which are disposed on an upper part and a lower part of a shaft 80, respectively. The direct bearings 83 guaranteed, which is a critical disadvantage especially in the field of precision instruments, which is highly sensitive to height variation of the bearing.

FIG. 1C shows another conventional head drum assembly mounted in a compact-size tape recorder such as a DVC (Digital Video Camera). For purpose of compactness, the head drum assembly of FIG. 1C has so-called direct bearings 83 and 84 which are disposed on an upper part and a lower part of a shaft 80, respectively. The direct bearings 83 and 84 include outer races 85 and 97, respectively, for supporting balls 93 and 95 seated in grooves 81 and 82 formed along an outer circumference of the shaft 80 at an upper side and a lower side.

An upper drum 90, having a plurality of magnetic heads 94, is rotatably disposed on an outer circumference of the direct bearings 83 and 84, and a lower drum 92 is press-fitted to the shaft 80 under the lower drum 90. Reference numeral 96 indicates a spring which functions as a preload means for applying a preload to the direct bearings 83 and 84, and reference numerals 96a and 96b indicate spring holders for supporting the spring 96.

Since the conventional head drum assembly with the above construction requires large grooves to directly insert the balls 93 and 95 of the upper and the lower bearings 83 and 84 in the shaft 80, the size of the shaft 80 is enlarged, especially in its diameter. Accordingly, the overall size of the head drum assembly also increases.

Also, since there is no inner race in the upper and the lower bearings 83 and 84 and the balls 93 and 95 are directly inserted in the grooves 81 and 82 of the shaft 80 to rotate the bearings, it is difficult to insert the shaft 80 into the upper and the lower bearing 83 and 84. Additionally, the head drum assembly is designed such that an outer diameter of the upper bearing 83 is larger than an inner diameter of the upper drum 90, while an outer diameter of the lower bearing is several microns smaller than a lower bearing fixing portion 90a of the upper drum 90. Therefore, the upper part of the upper bearing 83 has to be press-fitted into the upper drum 90, and interference occurs after the assembling. Since the upper bearing 83 is press-fitted Next, the bearing assembly is press-fitted into the upper drum 90. Since the lower bearing 84 is smaller than an inner diameter of the upper drum 90, the lower bearing 84 is smoothly inserted. However, since the outer diameter of the upper bearing 83 is larger than the inner diameter of the upper drum 90, when a force is exerted to the bearing assembly, the outer surface of the outer race 85 of the upper bearing 83 is press-fitted into the upper drum 90, sliding on an inner surface of the upper drum 90.

The magnetic head 94 is then disposed on a lower end of the upper drum 90 and a rotary transformer 98 is bonded. After that, the coils of the magnetic head 94 and the rotary transformer 98 are connected, a motor drum rotor 99 is bonded to the upper drum 90, and the shaft 80 is securely press-fitted to the lower drum 92. Next, a cover drum 87 is securely press-fitted onto an upper end of the shaft 80.

According to the above-described assembly, the upper bearing 83, which has a relatively large outer diameter, has to be press-fitted into the upper drum 90 of a relatively smaller inner diameter, and the lower bearing 84 is smoothly inserted into the upper drum 90 during assembling. However, damage can also occur to the bearings and the upper drum during the assembling process due to narrow gaps between the parts, and accordingly, precise assembly cannot be guaranteed. Further, the assembling process and control thereof is complicated. There is also excessive residual stress exerted to the upper drum 90. As a result, there is a disadvantage in that the assembly precision of the upper and the lower drums 90 and 92 deteriorates by age hardening.

The present invention aims to ameliorate or overcome these problems.

An assembly according to a first aspect of the invention is characterised in that the preload means includes a resilient body arranged to force against the stationary drum onto the first bearing.

A method according to a second aspect of the invention is characterised by:
press-fitting the first bearing onto the shaft, so that an inner race of the bearing is in close contact with an outer surface of the shaft; and
press-fitting the first bearing into a recess in the drum, so that an outer race of the bearing is in close contact with an inner surface of the recess.

A method according to a third aspect of the invention is characterised by:
press-fitting the second bearing into a recess in the drum, so that an outer race of the second bearing is in close contact with an inner surface of the recess, and engaging an inner race of the second bearing on the outer surface of the shaft in a sliding manner; and
providing a resilient body between the inner race of the second bearing and a second drum press-fitted onto the shaft, so that the resilient body preloads the bearings.

The above aspects and other features of the present invention become more apparent by describing preferred embodiments of the present invention with reference to the accompanying drawings, in which:
Figure 1A is a partial cross section view schematically showing one example of a conventional head drum assembly of a tape recorder;
Figure 1B is a schematic view showing a state where residual stress is exerted in a bearing assembly mounted in a conventional head drum assembly of a tape recorder;
Figure 1C is a cross section view showing another example of a conventional head drum assembly of a tape recorder;
Figure 2 is a cross section view schematically showing a head drum assembly of a tape recorder according to a first embodiment of the present invention;
Figures 3A to 3D are cross section views showing several steps of a bearing assembly process illustrating a preload method of the bearings of the Figure 2 head drum assembly;
Figure 4 is an exploded perspective view schematically showing a head drum assembly of a tape recorder according to a second embodiment of the invention;
Figure 5 is a cross section view schematically showing the head drum assembly of Figure 4 in an assembled state;
Figures 6A to 6D are cross section views showing several steps of a bearing assembly process illustrating a preload method of the bearings of the Figure 5 head drum assembly;
Figure 7 is a cross section view showing a head drum assembly of a tape recorder according to a third embodiment of the present invention;
Figure 8 is an enlarged cross section view showing the shaft of the head drum assembly of Figure 7;
Figure 9 is a cross section view showing the bearing assembly of the head drum assembly of Figure 7;
Figures 10 to 14 are views showing several steps of an assembling method of the bearing assembly of the Figure 7 head drum assembly, wherein,

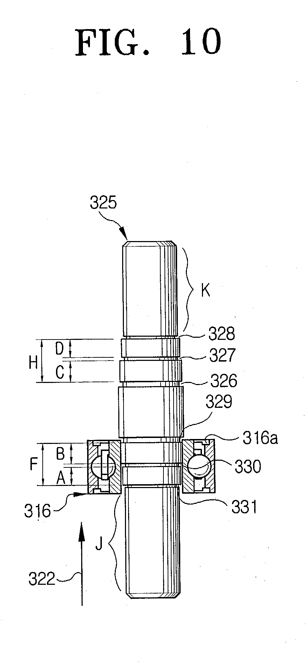

Figure 10 is a cross section view showing a state where the lower bearing is press-fitted onto the shaft;

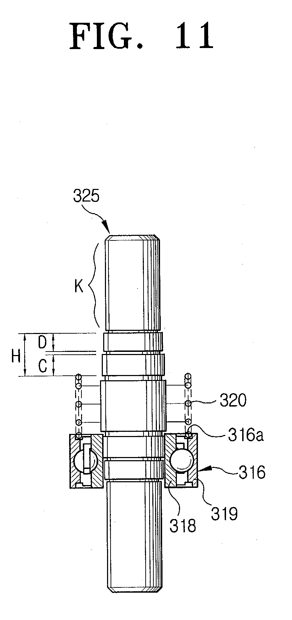

Figure 11 is a view showing a state where the coil spring is inserted after the lower bearing is press-fitted onto the shaft;

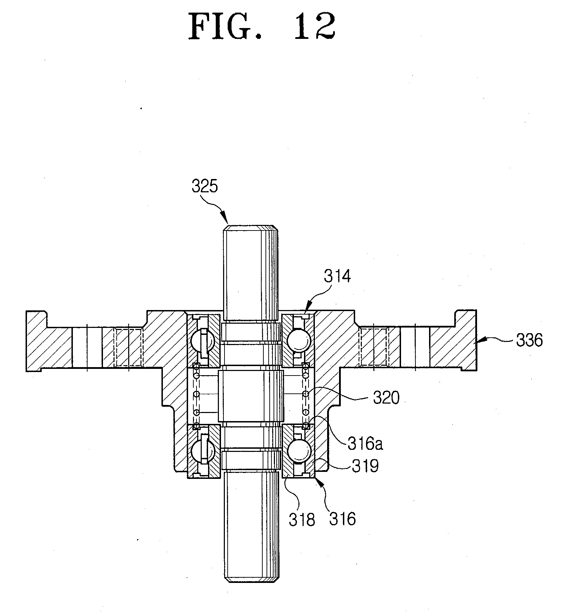

Figure 12 is a view showing a state where the bearing assembly is press-fitted into the upper drum;

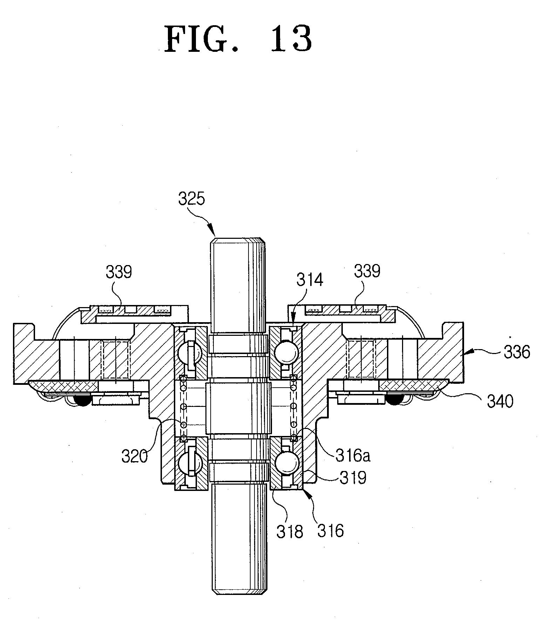

Figure 13 is a view showing a state where the motor drum rotor, the magnetic head, and the rotary transformer are assembled with the upper bearing; and

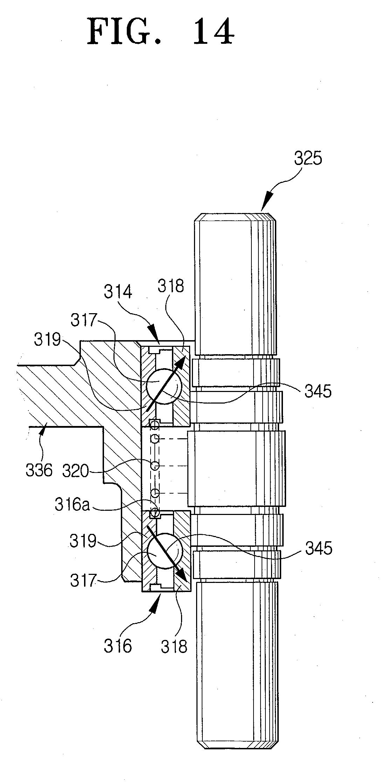

Figure 14 is a view showing the direction of a preload which is applied to the upper and the lower bearings of the head drum assembly;

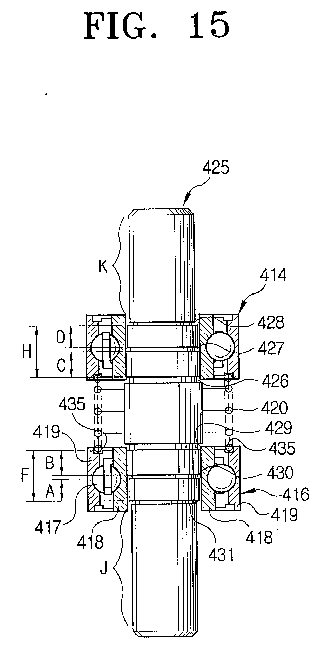

Figure 15 is a cross section view showing a bearing assembly according to a fourth embodiment of the present invention;

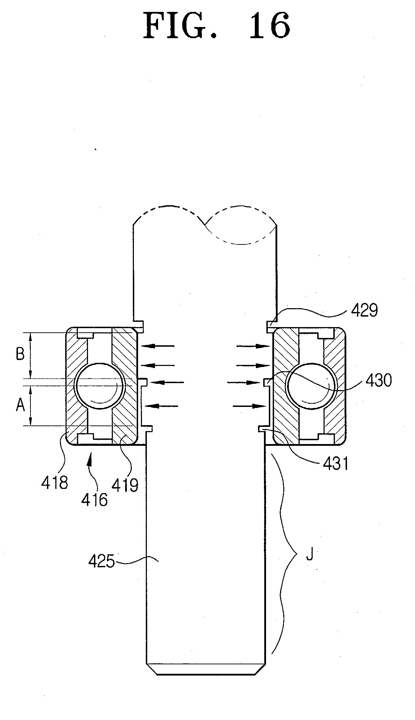

Figure 16 is a view showing the bearing assembly of Figure 15, in which residual stress is exerted to the lower bearings;

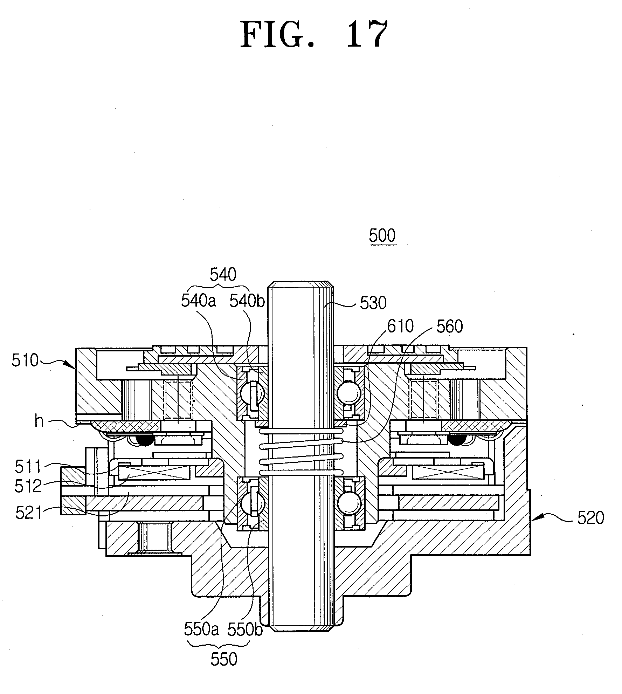

Figure 17 is a cross section view showing a head drum assembly of a tape recorder according to a fifth embodiment of the present invention; and

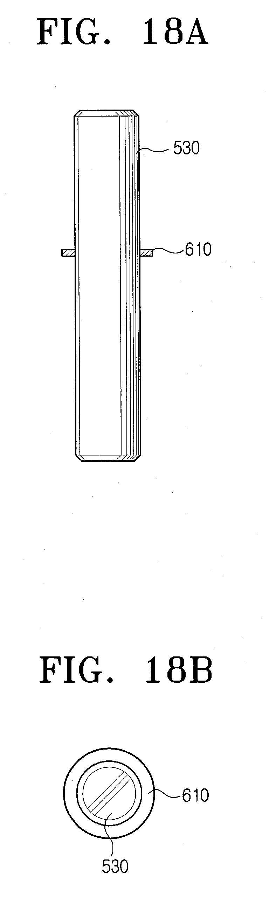

Figures 18A to 18G are views showing several steps of an assembly process of the head drum assembly of Figure 17.

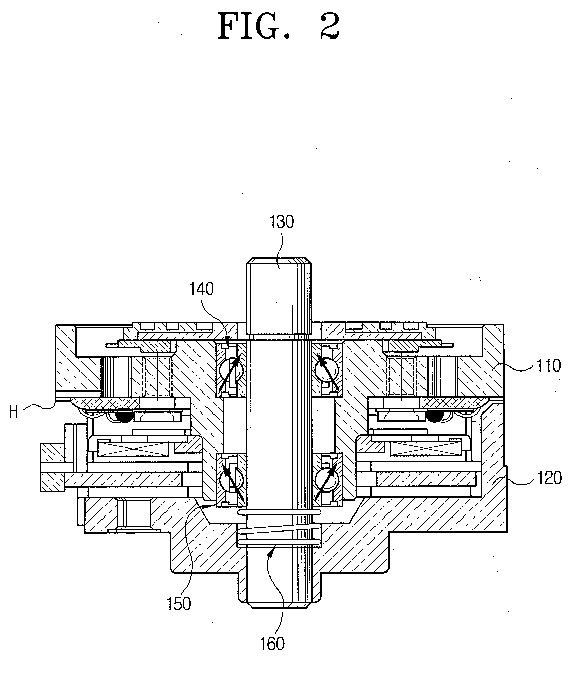

As shown in Figure 2, a head drum assembly 100 of a tape recorder according to a first embodiment of the present invention includes a rotary drum 110 for rotatably supporting a magnetic head H for recording/reproducing information by scanning a running magnetic tape, and a stationary drum 120 press-fitted onto a lower portion of a shaft 130 engaged in an axial bore of the rotary drum 110, parallel to the rotary drum 110. It also includes upper and lower bearings 140, 150 located separated from each other and connecting the rotary drum 110 to the shaft 130, and a resilient body 160 acting as a preload means for applying a preload to the lower bearing 150. The resilient body 160 is disposed between the stationary drum 120 and the lower bearing 150 and is mounted on an outer circumference of the shaft 130 to bias upwardly an inner race 151 of the lower bearing 150.

This head drum assembly employs a ball bearing supporting a plurality of balls to allow the balls to roll between an inner race and an outer race. The resilient body 160 is provided on the outer circumference of the shaft 130 between the stationary drum 120 and the lower bearing 150. The resilient body 160 resiliently biases and presses against the inner race 151 of the lower bearing 150, thereby applying a preload to the bearings 140, 150 in the directions indicated by arrows.

The resilient body 160 may be a compression coil spring. However, any suitable type of resilient body can be employed instead.

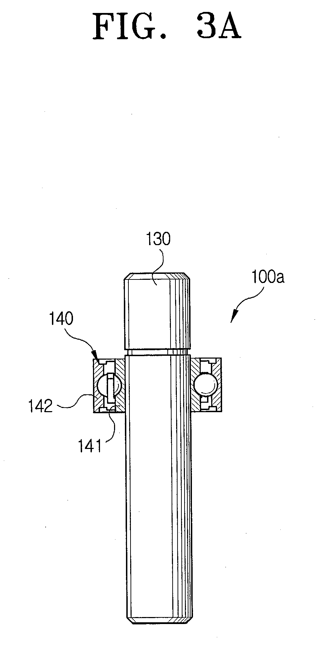

Described now with reference to Figures 3A to 3D is a method of assembling the bearing preloading structure for applying a preload to head drum bearings.

As shown in Figure 3A, the upper bearing 140 is press-fitted onto the shaft 130 downwardly, thereby forming a first assembly 100a. The inner diameter of an inner race 141 of the upper bearing 140 is slightly larger than the outer diameter of the shaft 130, so that the inner race 141 closely contacts with the outer circumference of the shaft 130 while maintaining the upper bearing 140 and the shaft 130 engaged with each other. The inner race 141 of the upper bearing 140 functions as a preloading boss.

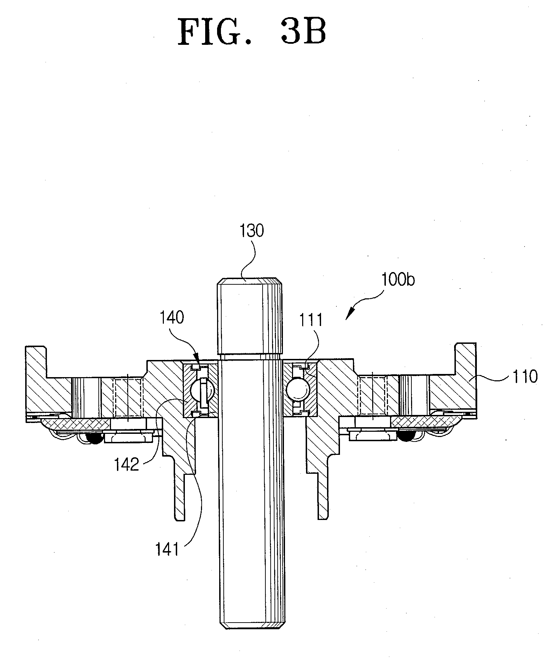

Next, as shown in Figure 3B, the first assembly 100a, in which the shaft 130 and the upper bearing 140 are assembled with each other, is press-fitted into the rotary drum 110 downwardly, thereby forming a second assembly 100b. At this point, an outer race 142 of the upper bearing 140 is pressed upward in close contact with an inner circumference of a recess 111 formed in a centre of upper side of the rotary drum 110 and is press-fitted into the recess 111.

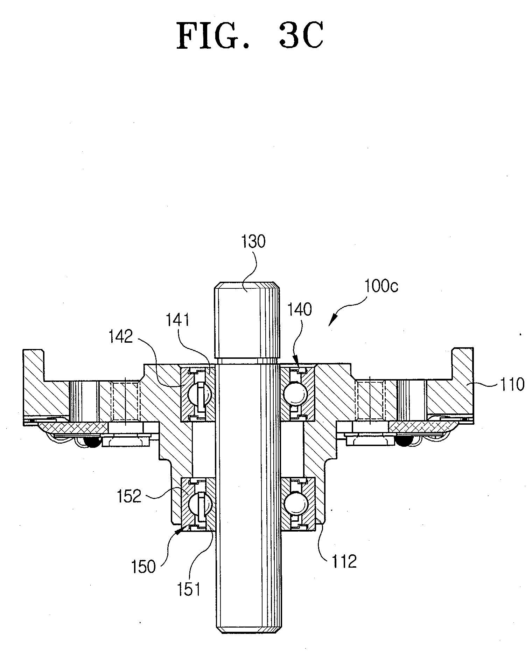

Next, as shown in Figure 3C, the lower bearing 150 is engaged with the rotary drum 110 of the second assembly 100b in an upward direction, thereby forming a third assembly 100c. The inner race 151 of the lower bearing 150 is slidably engaged on the outer circumference of the shaft 130, while the outer race 152 of the lower bearing 150 is pressed downward in close contact with an inner circumference of a recess 112 at a centre of under side of the rotary drum 110 and is forcedly press-fitted into the recess 112.

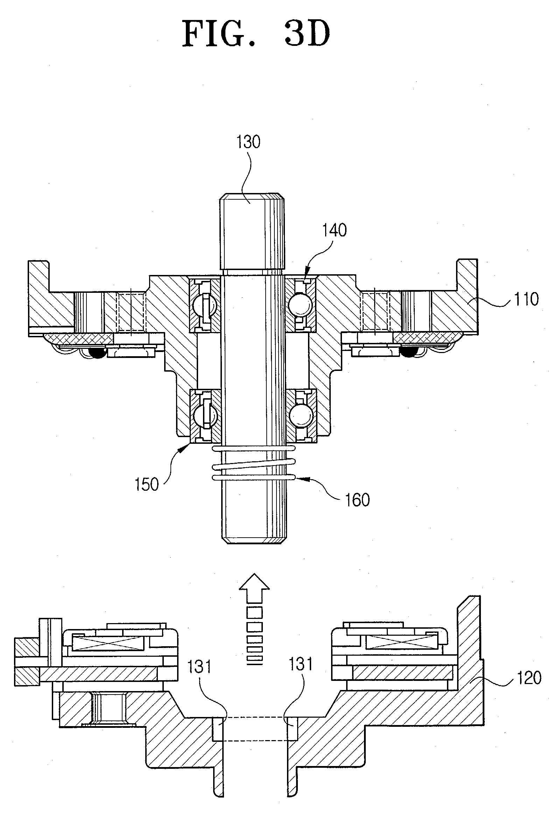

Finally, as shown in Figure 3D, a resilient preload means 160, in this case a coil spring, is mounted on the third assembly 100c, and then the stationary drum 120 is secured to the shaft 130 to support a lower portion of the resilient body 160. At this point, the resilient body 160 is located in a supporting recess 31 formed along the axial core of the stationary drum 120 and is resiliently biased to support the inner race 151 of the lower bearing 150, thereby applying the preload to the lower bearing 150 and, through the drum 110, the upper bearing 140. Consequently, the head drum assembly is completed.

It can be said that the assembly method comprises an upper bearing preload step and a lower bearing preload step as follows. The upper bearing preload step includes the steps of downwardly press-fitting the upper bearing so that an inner race of the upper bearing is pressed upward in a close contact with an outer circumference of the shaft, and downwardly press-fitting the upper bearing so that an outer race of the upper bearing is pressed upward in a close contact with an inner circumference of a recess at a centre of upper side of the rotary drum. The lower bearing preload step includes the step of upwardly press-fitting the lower bearing so that an outer race of the lower bearing is pressed downwardly in a close contact with an inner circumference of a recess at a centre of under side of the rotary drum, and slidably engaging an inner race of the lower bearing with an outer circumference of the shaft, and the step of mounting a resilient body to upwardly urge an inner race of the lower bearing and press-fitting the stationary drum onto the shaft so that the stationary drum supports a lower portion of the resilient body. The resilient body preferably is a compression coil spring, and preferably the inner race of the lower bearing is joined with the shaft by bonding. Also, it is preferred that a diameter of the inner race of the lower bearing is larger than a diameter of the shaft.

This provides a head drum assembly of a tape recorder with a bearings having inner and outer races, which can provide enhanced assembling efficiency and thus reduced manufacturing costs.

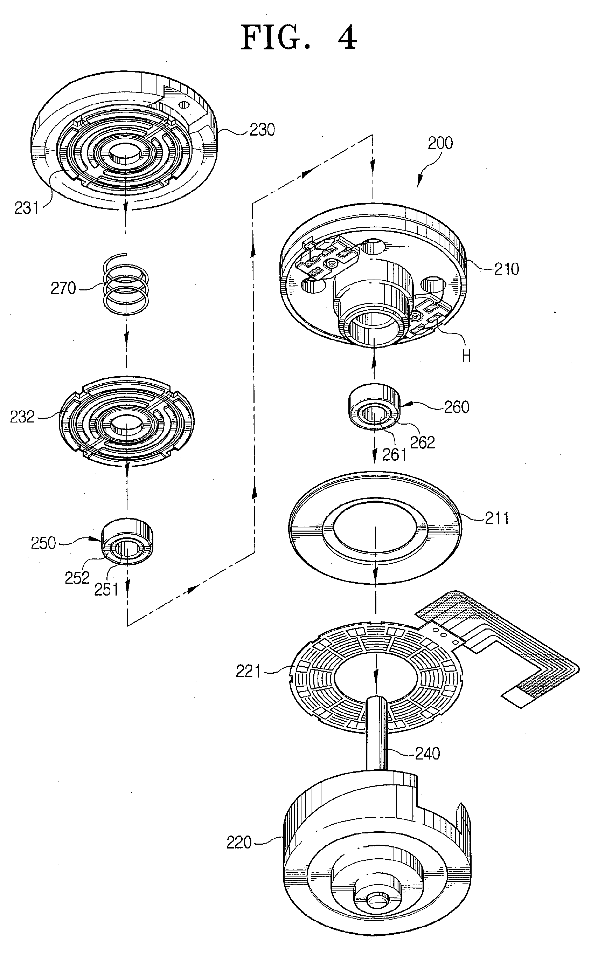

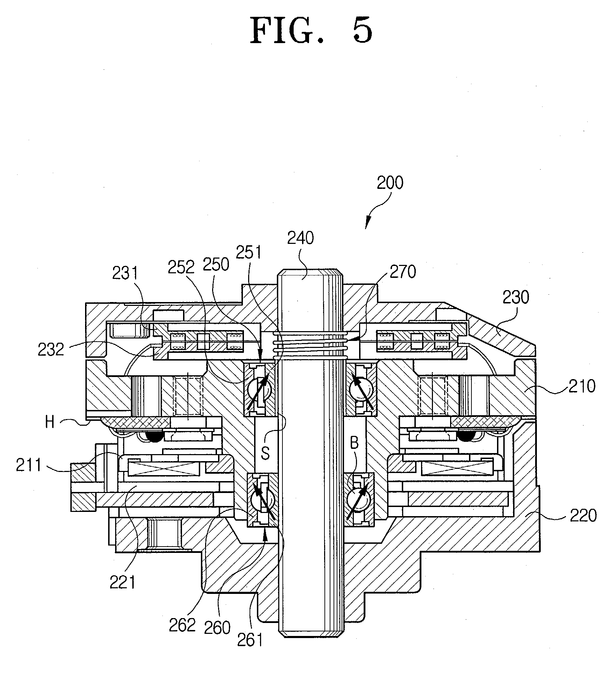

Figures 4 and 5 show a compact-size head drum assembly 200 mounted on a deck of a camcorder such as a DVC (Digital Video Camera) according to a second embodiment of the invention. The head drum assembly 200 is different in that a rotary drum 210 is interposed between a drum cover 230 and a stationary drum 220, in order to achieve compactness of the assembly.

Referring to Figures 4 and 5, the head drum assembly 200 includes a rotary drum 210 rotatably disposed on a shaft 240, a drum cover 230, a stationary drum 220, an upper bearing 250, a lower bearing 260, and a resilient body 270.

The rotary drum 210 is rotatably disposed on the shaft 240 to support a magnetic head H for recording/reproducing information by scanning a running magnetic tape. The drum cover 230 and the stationary drum 220 are press-fitted to the shaft 240 with the rotary drum 210 interposed between them. The upper and lower bearings 250, 260 are disposed between and connect the rotary drum 210 to the shaft 240. The resilient body 270 is disposed between the drum cover 230 and the upper bearing 250, to bias downwardly an inner race 251 of the upper bearing 250.

The upper bearing 250 and the lower bearing 260 are typical small-sized ball bearings provided with steel balls (see B of Figure 5) interposed between the inner race 251, 261 and the outer race 252, 262. Also included are a motor rotor 211, a motor stator 212 and a rotary transformer 231 and 232.

The resilient body 270 applies a preload to the upper and the lower bearings 250 and 260. The resilient body 270 is disposed between the drum cover 240 and the upper bearing 250 and encloses an outer circumference of the shaft 240. The resilient body 270 presses the inner race 251 of the upper bearing 250 to apply a preload to the upper bearing 250, and the preload (force) is transmitted to the outer race 262 of the lower bearing 260 via the rotary drum 210 and thereby applied to the lower bearing 260. The preload is applied in the arrowed directions of Figure 5.

The resilient body 270 can be a compression coil spring, although it could instead take any other suitable form.

The internal diameter of the inner race 262 of the lower bearing 260 is less than the external diameter of the shaft 240. The inner race 261 of the lower bearing 260 is press-fitted in a close contact with the outer circumference of the shaft 240. Also, the outer race 262 of the lower bearing 260 is press-fitted in a close contact with a recess formed in a lower central portion of the rotary drum 210.

The internal dimension of the inner race 251 of the upper bearing 250 is greater than the external dimension of the shaft 240 in diameter, so the upper bearing 250 is slidably connected with the shaft 240. Also, the outer race 252 of the upper bearing 250 is press-fitted in close contact with a recess which is formed in the upper central portion of the rotary drum 210. Accordingly, a small ring-shaped gap S is formed between the inner race 251 of the upper bearing 250 and the shaft 240. These parts are joined by bonding. Alternatively, they are not bonded.

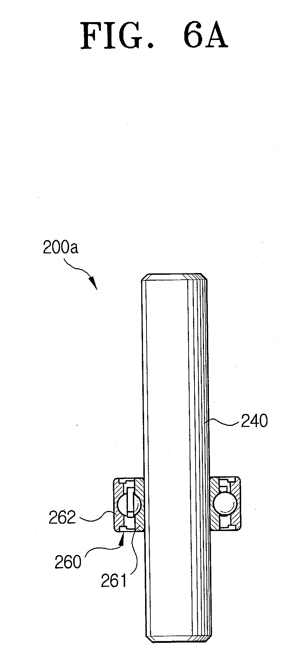

Described below with reference to Figures 6A to 6D is a method of forming the described bearing preload structure.

As shown in Figure 6A, the lower bearing 260 is forcedly press-fitted onto the shaft 240, thereby forming a first assembly 200a. The inner diameter of the inner race 261 of the lower bearing 260 is smaller than the outer diameter of the shaft 240, so that the inner race 261 of the lower bearing 260 is press-fitted in close contact with the outer circumference of the shaft 130 under a downwardly urging force.

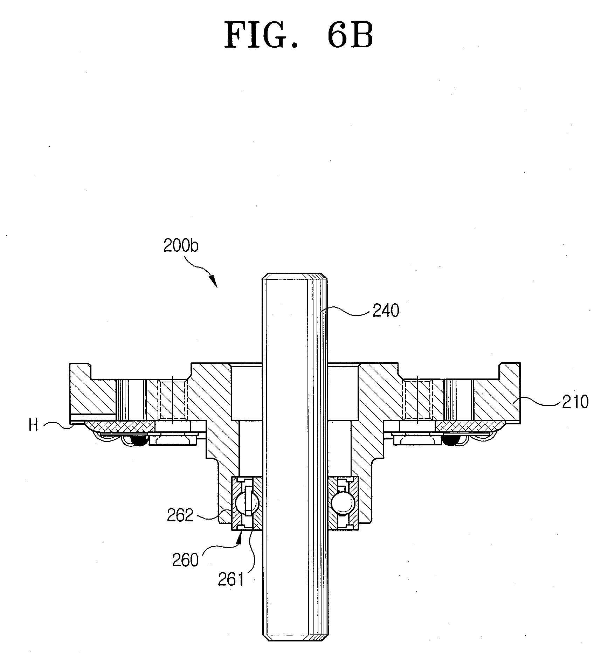

Next, as shown in Figure 6B, the first assembly 200a is press-fitted into the rotary drum 210, thereby forming a second assembly 200b. The outer race 262 of the lower bearing 260 is press-fitted into the recess formed in the lower central portion of the rotary drum 210 in close contact with an inner surface of the recess, under a downwardly urging force.

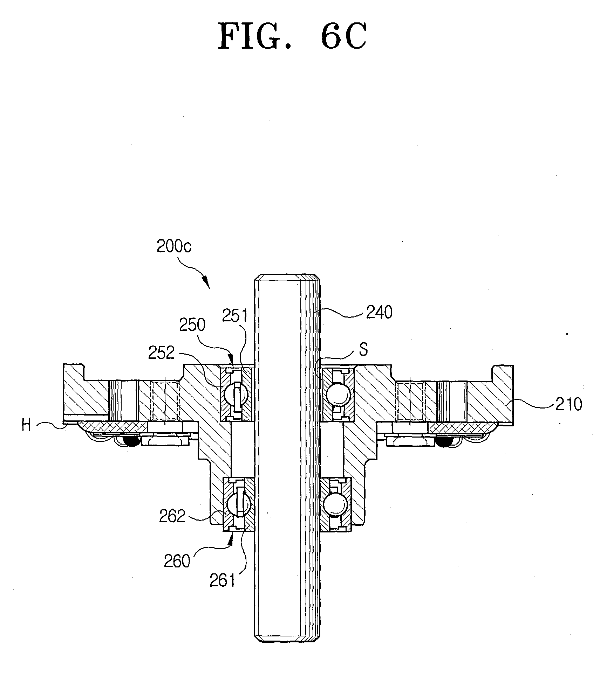

Next, as shown in Figure 6C, the upper bearing 250 is engaged with the rotary drum 210 of the second assembly 200b, thereby forming a third assembly 200c. The diameter of the inner race 251 of the upper bearing 250 is larger than that of the shaft 240 so that the upper bearing 250 is slidably engaged with the outer circumference of the shaft 240. The outer race 252 of the upper bearing 250 is forcedly press-fitted into a recess formed in a central upper side of the rotary drum 210 in a close contact with an inner circumference of the recess. There is defined a ring-shaped small gap S between the inner race 251 of the upper bearing 250 and the shaft 240, and the respective parts are joined by bonding. Alternatively, they are not bonded.

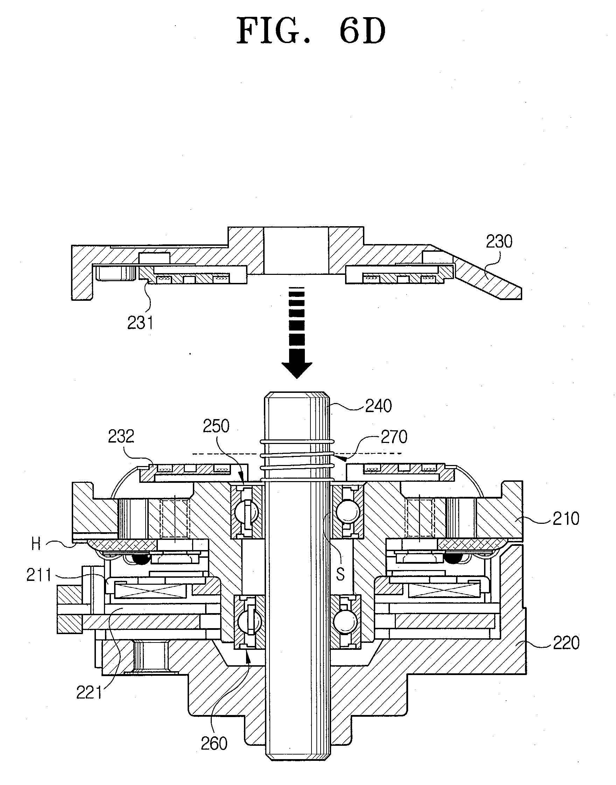

Finally, as shown in Figure 6D, after the stationary drum 220 is press-fitted onto the shaft 240 under the third assembly 200c, the coil spring 270 is mounted on an upper portion of the third assembly 200c, and the drum cover 230 is press-fitted onto the shaft 130 over the spring. At this point, the resilient body 270 is located on the inner race 251 of the upper bearing 250 to enclose the shaft, and the drum cover 230 is press-fitted onto the shaft 240 to compress the resilient body 270. As a result, the resilient body 270 is resiliently biased to press the inner race 251 of the upper bearing 250 downwardly so that the pressure is transmitted through the rotary drum 210 and the outer race 262 of the lower bearing 260, to preload the upper bearing 250 and the lower bearing 260 in the directions given by the arrows of Figure 5. Accordingly, the head drum assembly employing the preload method and construction of the head drum bearings according to this embodiment of the present invention is completed.

The head drum assembly 200 of the tape recorder thus uses general ball bearings 250 and 260, which are inexpensive and small-sized. The resilient body 270, such as a coil spring, is employed as a preload means and is resiliently biased. Accordingly, an improved preload method and structure of the bearing can be provided, and assembling efficiency improves and manufacturing cost decreases.

The second embodiment can be described as a head drum assembly of a tape recorder having an improved bearing preload structure comprising a rotary drum rotatably engaged with a shaft, a drum cover, and a stationary drum engaged with the shaft one on the other in parallel relation with the rotary drum being interposed therebetween, an upper bearing and a lower bearing which are disposed one on the other between the rotary drum and the shaft, and a preload means for applying preloads to the upper and the lower bearings. The preload means includes a resilient body disposed between the drum cover and the upper bearing and enclosing an outer circumference of the shaft, to downwardly urge an inner race of the upper bearing.

The method of applying preloads to bearings of the head drum assembly of the tape recorder, the head drum assembly includes a rotary drum rotatably engaged with a shaft, a drum cover and a stationary drum provided one on the other and engaged with the shaft in parallel relation with the rotary drum being interposed therebetween, and an upper bearing and a lower bearing which are disposed one on the other between the rotary drum and the shaft can be described as comprising the step of press-fitting the lower bearing so that an inner race of the lower bearing closely contacts with an outer circumference of the shaft, the step of press-fitting the lower bearing so that an outer race of the upper bearing closely contacts with an inner circumference of a recess at a centre of lower side of the rotary drum, the step of press-fitting the upper bearing so that an outer race of the upper bearing closely contacts with an inner circumference of a recess at a centre of upper side of the rotary drum and concurrently engaging the upper bearing so that an inner race of the upper bearing slides along an outer circumference of the shaft, and the step of mounting a resilient body to be supported on the inner race of the upper bearing and press-fitting the drum cover onto the shaft such that the resilient body can urge the inner race of the upper bearing downwardly for the application of a preload to the upper bearing. Here, the urging force of the resilient body is transmitted to the lower bearing via the rotary drum so that the preload can be applied to the lower bearing.

In the assembly and the method, the resilient body preferably is a compression coil spring, and the inner race of the upper bearing preferably is connected to the shaft by bonding. Also, it is preferred that the inner diameter of the inner race of the upper bearing is smaller than the diameter of the shaft. Accordingly, the inner race of the upper bearing is slidably engaged with the outer circumference of the shaft, while an outer race of the upper bearing is press-fitted in a close contact with an inner circumference of a recess which is defined at a centre of upper side of the rotary drum. Also, it is preferred that the inner diameter of an inner race of the lower bearing is larger than of that of the shaft, so that the inner race and outer race of the lower bearing are press-fitted in a close contact with the outer circumference of the shaft and the inner circumference of the recess at the centre of upper side of the rotary drum, respectively.

The second embodiment provides a head drum assembly of tape recorder which is capable of preventing displacement of a magnetic head even with prolonged use, and which is compact in size.

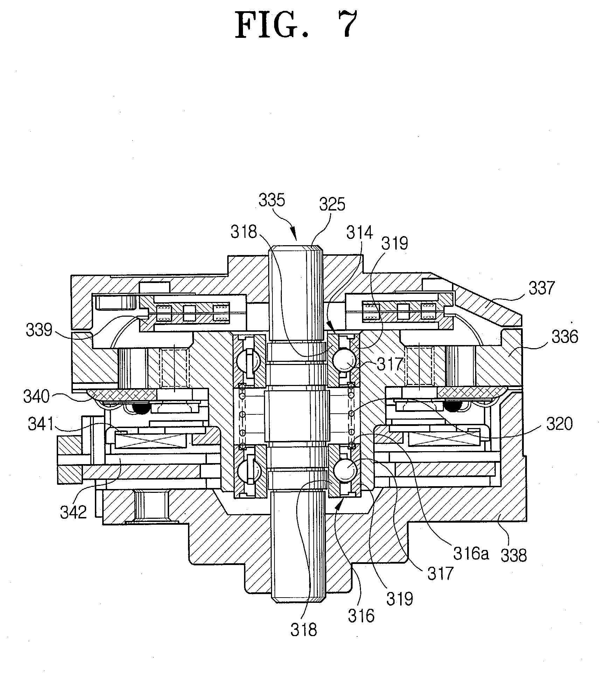

Figure 7 is a view illustrating a head drum assembly according to a third embodiment of the present invention, which includes a bearing assembly 335, an upper drum 336, a magnetic head 340, a rotary transformer 339, a cover drum 337 and a motor drum rotor 341. The bearing assembly 335 is provided at the inner centre of the head drum assembly, and includes a shaft 325, a spring 320, an upper bearing 314 and a lower bearing 316.

The shaft 325 has three grooves formed in the each of upper and lower ends, and these are described in greater detail below. Upper and lower bearings 314, 316 are press-fitted to the upper and lower ends of the shaft 325, respectively. A coil spring 320 is included between the upper and lower bearings 314, 316. One end of the coil spring 320 is inserted into a hole 316a defined in the uppermost surface of an outer race 319 of the lower bearing 316. The other end of the coil spring 320 is inserted into a hole defined in the lowermost surface of an outer race 319 of the upper bearing 314. This effects preloading of the upper and lower bearings 314, 316.

The upper drum 336 is rotatable and is press-fitted in the bearing assembly 335. The lower drum 338 is secured to the shaft 325 and thus the bearing assembly 335. The rotary transformer 339 is mounted on the upper drum 336, and a plurality of magnetic heads 340 and the motor drum rotor 341 are fixed to the lower portion of the upper drum 336. A stator 342 is bonded to the upper end of the lower drum 336. On the upper end of the upper drum 336, the cover drum 337 is fixed to the shaft 325.

Accordingly, the shaft 325 is securely fixed in place, and the upper drum 336 is rotated by the rotation of the motor drum rotor 341 to read or record through the magnetic head 340 data from/to a magnetic tape (not shown) which is running in contact with the circumference of the upper drum 336. When the upper drum 336 is rotated, the outer races 319 of the upper and lower bearings 314, 316 are also rotated, while the inner races 318 press-fitted on the shaft 325 remain stationary.

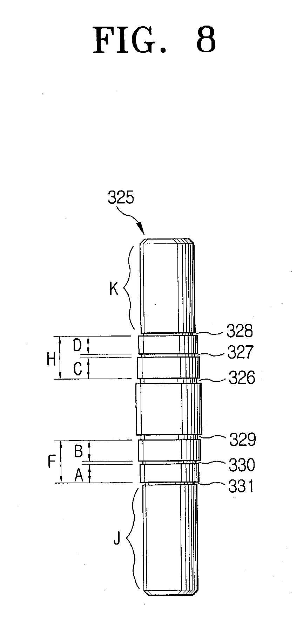

Figure 8 is a view illustrating the 325 shaft of the head drum assembly of Figure 7. The shaft 325 has three grooves at each of upper and lower portions thereof. More specifically, there are first, second and third grooves 326, 327, 328 formed in the upper portion, while there are fourth, fifth and sixth grooves 329, 330, 331 formed in the lower portion. The first groove 326 is sized to be larger than the second groove 327, and the second groove 327 is sized to be larger than the third groove 328. The fourth groove 329 is sized to be larger than the fifth groove 330, and the fifth groove 330 is sized to be larger than the sixth groove 331. The first and the fourth grooves 326, 329 are formed to the same depth. The second groove 327 and the fifth grooves 327, 330 are formed to the same depth. The third groove 328 and the sixth groove 331 are formed to the same depth.

The grooves 326 to 331 are formed at predetermined distance intervals. As shown in Figure 8, a distance from the first groove 326 to the second groove 327 is referred to as a 'distance C', a distance from the second groove 327 to the third groove 328 a 'distance D', and a distance from the first groove 326 to the third groove 328 a 'distance H'. The grooves 326, 327, 328 are formed such that the condition of H>C>D is satisfied. More specifically, it is preferred that the distance C be within the range of at or about 6H/11 to at or about 2H/3.

Further, the shaft diameter between the first groove 326 and the second groove 327 is slightly larger than the internal diameter of the inner race of the upper bearing 316 (see Figure 7). The shaft diameter between the second groove 327 and the third groove 328 is slightly smaller than the internal diameter of the inner race of the upper bearing 316. The shaft diameter at a portion K between the third groove 328 and the upper end of the shaft 325 is smaller than the shaft diameter between the second and third grooves 327, 328.

The shaft diameter between the fourth groove 329 and the fifth groove 330 is slightly larger than the internal diameter of the inner race of the lower bearing 314 (see Figure 7). The shaft diameter between the fifth groove 330 and the sixth groove 331 is slightly smaller than the internal diameter of the inner race of the lower bearing 314. Further, the shaft diameter at a portion J between the sixth groove 331 to the lower end of the shaft 325 is smaller than the shaft diameter between the fifth groove 330 and the sixth groove 331.

The shaft 325 is symmetrical about a point midway between the first and fourth grooves 326, 329. That is, the first and the fourth grooves 326, 329 have the same depth, the second and the fifth grooves 327, 330 have the same depth, and the third and the sixth grooves 328, 331 have the same depth, respectively. The distances and shaft diameter between the respective grooves 326 through 331 should satisfy the following conditions, i.e., A=D, B=C, F=H. The portion J may or may not be the same length as the portion K.

Thus, the head drum assembly of a tape recorder can be described as including a rotary upper drum, a stationary lower drum, and a magnetic head for reading/reproducing information with respect to a magnetic tape. The head drum assembly can be said to include a shaft having a plurality of grooves defined therein, an upper bearing press-fitted to the upper portion of the shaft and having an outer diameter larger than the inner diameter of the rotary upper drum, a lower bearing press-fitted to the lower portion of the shaft and having an outer diameter smaller than the inner diameter of the rotary upper drum, and a resilient body disposed between the upper bearing and the lower bearing to apply a preload to the upper and lower bearings. The plurality of grooves can be said to include first, second and third grooves formed in the upper portion of the shaft at predetermined intervals, and fourth, fifth and sixth grooves formed in the lower portion of the shaft at predetermined intervals. Here, the second groove is smaller than the first groove and the third groove is smaller than the second groove, the fifth groove is smaller than the fourth groove, and the sixth groove is smaller than the fifth groove. It is preferable that the first and the fourth grooves, the second and the fifth grooves, and the third and the sixth grooves are formed in the same depths, respectively. Also, it can be said that the shaft diameter from the first to second grooves of the shaft is larger than the inner diameter of the upper bearing, and the shaft diameter from the second to the third grooves of the shaft is smaller than the inner diameter of the upper bearing, and the shaft diameter from the third groove to the upper end of the shaft is smaller than the shaft diameter from the second to the third grooves of the shaft. It can also be said that the shaft diameter from the fourth to the fifth grooves is larger than the inner diameter of the lower bearing, the shaft diameter from fifth to sixth grooves is smaller than the inner diameter of the lower bearing, and the shaft diameter from the sixth groove to the lower end of the shaft is smaller than the shaft diameter from the fifth to the sixth grooves. Here, the distance from the first to the second grooves is larger than the distance from the second to the third grooves, and the distance from the fourth to the fifth grooves is larger than the distance from the fifth to the sixth grooves. It can further be said that the distance from the first to the second grooves is in the range of at or about 6/11 to at or about 2/3 the length of the distance from the first to third grooves, and the distance from the fourth to fifth grooves is in the range of at or about 6/11 to at or about 2/3 the length of the distance from the fourth to the sixth grooves. The resilient body is preferably a coil spring.

This head drum assembly of a tape recorder enables easy assembly, a constant high assembling precision even with a long use, prevents damages to the bearings and shaft during the assembling process. It is also able to prevent the deterioration of assembly precision of upper and lower drums due to age hardening.

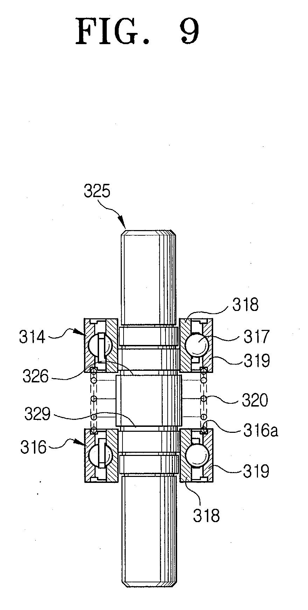

Figure 9 is a view illustrating a bearing assembly of a head drum assembly according to the third embodiment of the invention. As shown in Figure 9, the upper and lower bearings 314, 316 are rolling bearings, each being provided with a ball 317 and a retainer (not shown) disposed between the inner and outer races 318, 319. Other types of bearings could be used instead.

The upper bearing 314 is press-fitted on the upper end of the shaft 325 in the downward direction so that one end thereof reaches the first groove 326. The lower bearing 316 is press-fitted on the lower end of the shaft 325 such that one end thereof reaches the fourth groove 329. A spring 320 is disposed between the upper and lower bearings 314, 316. The spring 320 gives a preload to the outer races 319 of the upper and lower bearings 314, 316.

The outer diameter of the external surface of the outer race 319 of the upper bearing 314 is slightly larger than the inner diameter of the upper head drum 336 (Figure 7), and the outer diameter of the external surface of the outer race 319 of the lower bearing 316 is slightly smaller than the inner diameter of the upper head drum 336.

By the above construction, residual stress can be minimised during the press-fitting of the upper and lower bearings 314, 316. Additionally, by forming the shaft diameters of the J, K, A and D portions (see Figure 8) of the shaft 325 to be smaller than the internal diameter of the inner races 318 of the upper and lower bearings 314, 316, assembly of the upper and lower bearings 314, 316 is easy and damage to the bearings 314, 316 and to the shaft 325 during the assembling process can be reduced and/or minimised.

Further, according to this embodiment of the present invention, instead of inserting the bearing ball in a groove formed in the shaft, by disposing the bearing ball between the inner and outer races 318, 319, the shaft 325 can have a smaller diameter. As a result, the overall size of the bearing assembly can be reduced, and compactness of the tape recorder can be achieved. Further, because residual stress of the upper and lower bearings 314, 316 and the shaft 325 is small, there is almost no displacement of the magnetic head of the head drum even after prolonged use of the tape recorder.

Figures 10 to 14 are views illustrating the assembling method for the head drum assembly according to the third embodiment of the present invention. First, the lower bearing 316 is moved from the lower end toward the upper end of the shaft 325, in the direction indicated by the arrow 322 . Because the shaft diameter of the shaft portion J is less than the inner diameter of the lower bearing 136, the lower bearing 316 smoothly slides over the J portion, and over the A portion. Also, because the shaft diameter of B portion is slightly larger than the inner diameter of the inner race 318 of the lower bearing 316, the lower bearing 316 is press-fitted with one end reaching the fourth groove 329.

Next, as shown in Figure 11, the spring 320 is moved from the upper end toward the lower end of the shaft 325. At this time, one end of the spring 320 is inserted in the hole 316a which is defined in the uppermost surface of the outer race 319 of the lower bearing 316.

Next, the upper bearing 314 is moved from the upper end toward the lower end of the shaft 325. Because the shaft diameter of the portion K is less than the internal dimension of the inner race 318 of the upper bearing 314, the upper bearing 314 is easily passed over the portion K, and the upper bearing 314 slides smoothly over the portion D. Also, because the shaft diameter of the portion C is slightly greater than the inner diameter of the upper bearing 314, the upper bearing 314 is press-fitted with its one end reaching the first groove, as in Figure 9. At this time, the spring 320 gives a preload to the outer races 319 of the upper and lower bearings 314, 316.

After that, as shown in Figure 12, the upper drum 336 is heated, and the bearing assembly is press-fitted to the inner bore of the upper drum 336 downwards as shown. Because the outer diameter of the lower bearing 316 is slightly smaller than the inner diameter of the upper drum 336, the bearing assembly is slidably inserted. Because the outer diameter of the upper bearing 314 is slightly larger than the inner diameter of the upper drum 336, the upper bearing 314 is press-fitted to the upper drum 336 after the inner diameter portion of the upper drum 336 is heated.

Next, air is blown to cool the upper portion of the upper drum. The lower portion of the upper drum 336 is cooled a predetermined time interval after the cooling of the upper portion.

After that, a bond is applied to between the outer race 319 of the lower bearing 316 and the upper drum 336, and then annealing is performed. Accordingly, the bond-applied area is heated with high temperature ranging from at or about 60° C to at or about 80° C, and left from at or about 2 hours to at or about 6 hours to be cooled to room temperature.

Through use of the annealing process, the bond applied between the outer race 319 of the lower bearing 316 and the upper drum 336 can be uniformly distributed so that the respective parts can be securely fixed.

Next, as shown in Figure 13, the magnetic head 340 is assembled to the lower end of the upper drum 336 and adjusted. The rotary transformer 337 is bonded to the upper end of the upper drum 336, and the coils of the magnetic head 340 and the rotary head 337 then are connected. Then the motor drum rotor 341 is bonded to the lower end of the upper drum 336, and a worker grabs the shaft 325 to press-fit the same into the lower drum 338 in which the stator 342 has already been bonded (see Figure 7).

In assembling the head drum assembly according to the described above, only the upper bearing 314 is press-fitted in the upper drum 336, while the lower bearing 316 is smoothly inserted by sliding. The bond is then, and the overall assembling process for the head drum assembly becomes simplified, and damage to the bearings 314, 316 can be reduced. Further, as a result of the heat processing described above, displacement of the head of the upper drum 336 due to high temperature heat deformation can be prevented.

Figure 14 is a enlarged partial sectional view of the Figures 7 and 13 head drum assembly. Figure 14 shows the direction of preload applied on the upper and lower bearings 314, 316. More specifically, the coil spring 320 applies preload to the upper and lower bearings 314, 316 in the direction indicated by an arrow 345. Due to the preload in the direction 345, the upper and lower bearings 314, 316 have less contact area between the outer race 319 and the ball 317 while rotating. Also, there is less interference between the inner races 318 of the upper and lower bearings 314, 316 and the shaft 325, and also between the rotating upper drum 336 and the outer races 319 of the upper and lower bearings 314, 316. Accordingly, problems such as tremor and instability are reduced, and the assembly precision of the head drum assembly is improved.

A head drum assembly of a tape recorder assembled by forming grooves in the upper and lower ends of the shaft to different depths according to the embodiment described above reduces residual stress, and substantially eliminates displacement of the magnetic head of the head drum even with prolonged use of the tape recorder.

Further, instead of directly inserting the bearing ball in the shaft, by press-fitting the inner race of the bearing to the shaft, the shaft size can be reduced, and therefore, the overall size of the head drum assembly can be reduced, making it more compact. Also, because the coil spring exerts preload on the outer race of the bearing, the assembly precision does not deteriorate even with long periods of use.

With the assembling method of the head drum assembly, in assembling the bearing assembly with the upper drum, the lower bearing is smoothly inserted by sliding and only the upper bearing is press-fitted. As a result, assembly of the head drum assembly becomes easier, and damage to the bearings and the shaft can be reduced during the assembling process, so that noise can be reduced. Because less residual stress is generated during the press-fitting of the bearings to the shaft or bearing assembly to the upper drum, deterioration of assembly precision due to age hardening and temperature change does not occur, and quality degradation due to environmental factors, especially in the equatorial areas and near the poles, is reduced.

The fourth embodiment provides a bearing assembly which enables easy assembling of a shaft and bearings, reduced damages to the shaft and bearings, and reduces the residual stress to the bearings and the shaft, allowing substantially little or no thermal deformation even with the long use of the bearing assembly, and is suitable for the field of precision instruments.

The method of assembling the third embodied head drum assembly can be described as follows. The head drum assembly comprises a rotary upper drum, a stationary lower drum, and a magnetic head for reading/reproducing information with respect to a magnetic tape, comprises the steps of pressing the lower bearing from the lower portion toward the upper portion of the shaft and inserting the coil spring to the shaft, press-fitting the upper bearing from the upper portion toward the lower portion of the shaft, thereby completing a bearing assembly, heating the upper drum and press-fitting the bearing assembly from the upper portion toward the lower portion of the upper drum, cooling the assembly of the upper drum and the bearing assembly by blowing in an air to the upper drum, and applying a bond between an outer race of the lower bearing and the upper drum and performing a heat processing for a predetermined time. In the heat processing step, the upper drum is heated from about 60° to about 90°, left in this temperature for about 2 to 6 hours, and cooled to room temperature.

The bearing assembly of the third embodiment can be described as follows. It includes a centre shaft having a plurality of grooves defined therein, an upper bearing press-fitted to the upper portion of the centre shaft, a lower bearing press-fitted to the lower portion of the centre shaft and being spaced apart from the upper bearing by a predetermined distance, and a resilient body disposed between the upper bearing and the lower bearing to apply a preload to the upper and lower bearings.

Other aspects of the bearing assembly of the Figures 7 to 14 will now be described with reference to the fourth embodiment of Figure 15, which shows a centre shaft 425, an upper bearing 414, a lower bearing 416 and a spring 420.

The spring 420 is one example of a resilient member of a predetermined resiliency, and various alternatives can be used instead. One end of the spring 420 is inserted in a hole 435 which is defined in an outer race 419 of a lower bearings 416, to apply a preload to the outer races 419 of the upper and lower bearings 414, 416.

The centre shaft 425 is substantially the same as the shaft 325 described with reference to Figure 8. A first groove 426, a second groove 427 and a third groove 428 formed in the upper portion, and a fourth groove 429, a fifth groove 430 and a sixth groove 431 are formed in the lower portion. The internal diameters of the inner races 418 of the bearings have the same relationship to the diameters of the shaft as that described in the third embodiment.

The upper and lower bearings 414, 416 are rolling bearings, each having an inner race 418, an outer race 419, a ball between the inner race 418 and the outer race 419, and a retainer (not shown) for holding the ball in place. In addition to the rolling bearings, various alternatives can be used as the upper and lower bearings 414, 416.

The upper bearing 414 is press-fitted to the upper end of the centre shaft 425 downwards as shown so that one end thereof reaches the first groove 426. The lower bearing 416 is placed over the lower end of the shaft 425 such that one end thereof reaches the fourth groove 429. A spring 420 is disposed between the upper and lower bearings 414, 416. The spring 420 applies a preload to the outer races 419 of the upper and lower bearings 414, 416.

Figure 16 is a schematic view illustrating a residual stress at the lower bearing assembly 416. The residual stress is the same for the upper bearing 414. As shown in Figure 16, the distance J from the lower end of the centre shaft 425 to the sixth groove 431 has a smaller diameter than the inner diameter of the lower bearing 416, so no stress occurs during the inserting of the lower bearing 416. However, although the portion A from the fifth groove 430 to the sixth groove 431 of the centre shaft 425 has a shaft diameter smaller than the inner diameter of the lower bearing 416, the difference is very small such that it is almost same as the inner diameter of the lower bearing 416. Accordingly, there exists some residual stress after the press-fitting of the lower bearing 416, as shown in Figure 16.

The shaft diameter of the portion B between the fourth groove 429 and the fifth groove 430 of the centre shaft 425 is greater than the inner diameter of the lower bearing 416, and accordingly, it is the portion B that is actually press-fitted. Because the lower bearing 416 is press-fitted upwards as shown under great pressure in this portion, not only is the residual stress generated inside the centre shaft 425 which tends to push away, but also residual stress is generated which pushes in the direction opposite to the press-fitting direction, i.e. downwards as shown.

However, as shown in Figure 16, because the upper end of the lower bearing 416 is positioned in the fourth groove 429, the residual stress inside the centre shaft 425 pushing downwards can be counterbalanced. More specifically, as shown in the bearing assembly of Figure 1B, the stress pushing in the downward direction can exist with the upper end of the lower bearing 416 being contacted with the centre shaft 425. However, in the fourth embodiment, due to the presence of the fourth groove 29 in the shaft 425, downward residual stress does not occur.

This applies also to the upper bearing 414. Because the lower end of the upper bearing 414 is placed in the first groove 426, there is no residual stress existing in the centre shaft 425 which pushes in the upward direction.

In the bearing assembly thus constructed, during the press-fitting of the upper and lower bearings 414, 416, only the portions B and C of the centre shaft 425 (see Figure 15) are press-fitted, while the other portions are not subject to any pressure, instead being smoothly slid over the shaft 425. As a result, less residual stress is applied to the upper and lower bearings 414, 416, and there is no possibility of heat deformation even with prolonged use.

Further, by forming the shaft diameters of the portions J, K, A and D (see Figure 15) of the centre shaft 425 to be smaller than the inner diameter of the upper and lower bearings 414, 416, assembling the upper and lower bearings 414, 416 becomes easier, and damage to the upper and lower bearings 414, 416 and the centre shaft 425 can be minimised.

As described above, with the bearing assembly according to the fourth preferred embodiment of the present invention, assembling the bearing is simplified, and damages to the bearings and centre shaft during the assembling process can be minimised.

Furthermore, because there is small residual stress applied to the bearings and the centre shaft, there is no possibility of having thermal deformation even prolonged use of the bearing assembly, and also, there is no possibility that the assembled positions of the upper and lower bearings are changed.

Figure 17 is a schematic sectional view illustrating a head drum assembly of a tape recorder according to a fifth embodiment of the invention. The assembly includes a rotary drum 510, a stationary drum 520, a rotary shaft 530, upper and lower bearings 540, 550, a compression coil spring 560, a head drum assembly 500, and a bushing 610.

The rotary drum 510 rotatably supports a magnetic head H which scans a running magnetic tape to record/reproduce information. The stationary drum 520 is press-fitted to the lower portion of the rotary shaft 530. The rotary shaft 530 is joined in the shaft hole of the rotary drum 510. The upper and lower bearings 540, 550 are disposed between the rotary drum 510 and the rotary shaft 530 at upper and lower portions, respectively. The preload means 560 applies a preload to the upper and lower bearings 540, 550. The bushing 610 sets a position for the press-fitting of the upper bearing 540.

The bushing 610 is press-fitted to a predetermined location on the rotary shaft 530, to determine the position where the upper bearing 540 is to be press-fitted with respect to the rotary shaft 530. The bushing 610 supports the inner race 540b of the After that, a bond is applied to between the outer race 319 of the lower bearing 316 and the upper drum 336, and then annealing is performed. Accordingly, the bond-applied area is heated with high temperature ranging from at or about 60° C to at or about 80° C, and left from at or about 2 hours to at or about 6 hours to be cooled to room temperature.

Through use of the annealing process, the bond applied between the outer race 319 of the lower bearing 316 and the upper drum 336 can be uniformly distributed so that the respective parts can be securely fixed.

Next, as shown in FIG. 13, the magnetic head 340 is assembled to the lower end of the upper drum 336 and adjusted, and the rotary transformer 337 is bonded to the upper end of the upper drum 336 and then the coils of the magnetic head 340 and the rotary head 337 are connected

Then the motor drum rotor 341 is bonded to the lower end of the upper drum 336, and a worker grabs the shaft 325 to press-fit the same into the lower drum 338 in which the stator 342 has already been bonded (FIG. 7).

In assembling the head drum assembly according to the described above, only the upper bearing 314 is press-fitted in the upper drum 336, while the lower bearing 316 is slid to be smoothly inserted. The bond is then applied between the respective parts, and the overall assembling process for the head drum assembly becomes simplified, and damages to the bearings 314, 316 can be reduced.

Further, as a result of the heat processing described above, displacement of the head of the upper drum 336 due to high temperature heat deformation can be prevented.

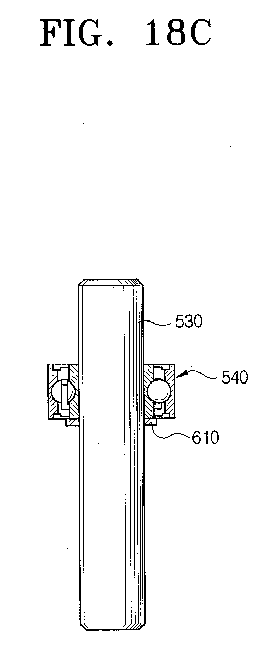

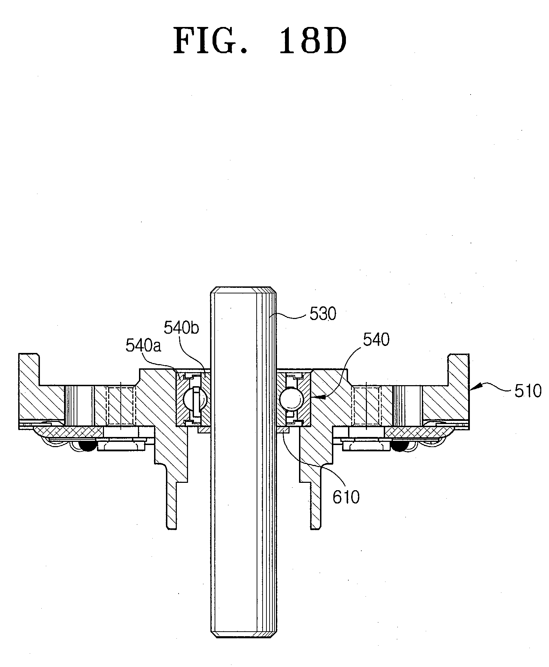

FIG. 14 is a enlarged partial sectional view of the head drum assembly according to an embodiment of the present invention. FIG. 14 shows the direction of preload applied on the upper and lower bearings 314, 316. More specifically, a coil spring Next, as shown in Figure 18C, the upper bearing 540 is press-fitted to the rotary shaft 530 to be supported on the upper surface of the bushing 610. The bushing not only determines the position where the upper bearing 540 is to be press-fitted to, but also functions as a stopper. After the press-fitting of the upper bearing 540, the rotary drum 510 is press-fitted from the lower direction of the rotary shaft 530, so that the upper bearing 540 is disposed between the rotary drum 510 and the rotary shaft 530, as shown in Figure 18D.

When the upper bearing 540 is in place, the inner race 540b side of the upper bearing 540 is press-fitted in the rotary shaft 530, and the outer race 540a side of the upper bearing 540 is press-fitted to the rotary drum 510, so as to support the rotary drum 510 in rotation.

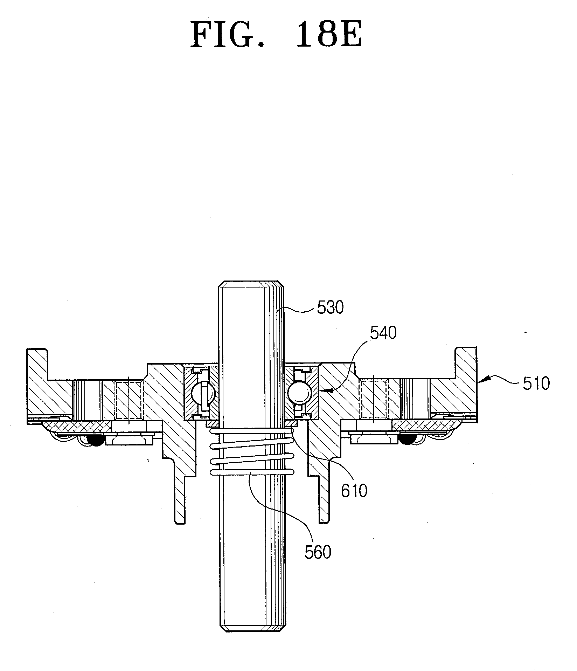

After the press-fitting of the rotary drum 510, the preload means 560 (such as a compression coil spring), is mounted upwards as shown to be disposed around the outer circumference of the rotary shaft 530, as shown in Figure 18E.

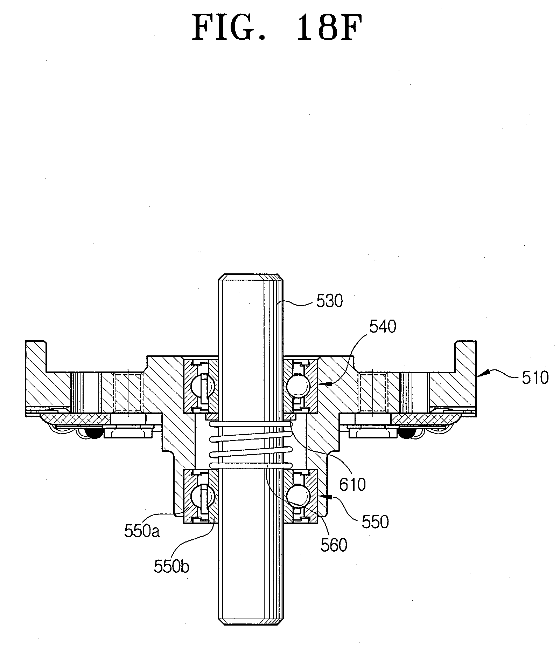

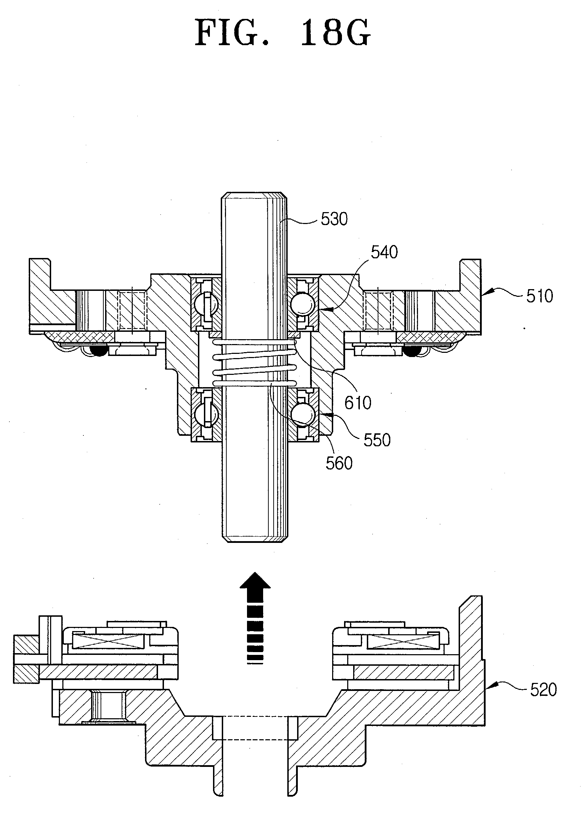

Referring now to Figure 18F, the lower bearing 550 is press-fitted upwards as shown into the lower recess of the rotary drum 510, simultaneously compressing the compression coil spring 560. The inner race 550b of the lower bearing 550 is press-fitted to the rotary shaft 530, and the outer race 550a of the lower bearing 550 is press-fitted to the lower recess of the rotary drum 510 so as together with the upper bearing 540 to support the rotary drum 510 during high-speed rotation. Figure 18G shows the stationary drum 520 being fitted onto shaft 530.

Thus a simple structure, in which the bushing 610 is press-fitted to the rotary shaft, is used. Accordingly, limitations due to the high pressure input from the press-fitting of the upper bearing are resolved.

Furthermore, during high-speed rotation of the rotary drum, the upper bearing can be stably supported in the initial position even under high temperature or vibrations because of the bushing. Accordingly, problems such as the joining of the rotor and the stator due to downward displacement of the upper bearing can be resolved.

The head drum assembly of a tape recorder is capable of minimising the problems which usually accompany the press-fitting process of an upper bearing with respect to a shaft, and also minimising a deviation from an initial position due to high temperature and vibration during the high speed rotation of the shaft.

The head drum assembly of a tape recorder of the fifth embodiment can be described as follows. It includes a rotary drum and a stationary drum engaged with a rotary shaft and arranged one on the other in parallel relation, an upper bearing and a lower bearing disposed one on the other between the rotary drum and the rotary shaft, a preloading means for applying a preload to the upper and lower bearings, and a bushing for determining the position of the upper bearing during the press-fitting of the upper bearing with respect to the rotary shaft. It is preferable that the inner diameter of the bushing be larger than the diameter of the rotary shaft. The bushing can be joined with the rotary shaft by bonding. The preloading means is provided around the outer circumference of the rotary shaft, and includes a resilient body which is disposed between the bushing and the lower bearing to upwardly urging the bushing, while downwardly urging the inner race of the lower bearing. The resilient body is preferably a compression coil spring.

With all the above described embodiments of the invention, there is no need for a preload boss and screws for the connection of the related parts. Further, because there is not necessarily the need for an annealing process to resolve thermal deformation from the excessive press-fitting of the bearing, productivity improves and manufacturing costs can be reduced.

It will be understood that the present invention is not limited to the embodiments described above. It will be understood by those skilled in the art that various modifications and changes in form and details may be made therein without departing from the scope of the invention as defined by the appended claims.

## Claims

1. A head drum assembly for a tape recorder comprising:
a rotary drum (110) and a stationary drum (120) engaged on a shaft (130);
first and second separated bearings (140, 150) connecting the rotary drum to the shaft; and
means (160) for preloading the first and second bearings,
**characterised in that** the preload means includes a resilient body arranged to force against the stationary drum onto the first bearing.

2. The head drum assembly of claim 1, wherein the resilient body is a compression coil spring.

3. The head drum assembly of claim 1 or claim 2, wherein a diameter of an inner race (141) of either one or alternatively both of the first and second bearings is larger than a diameter of the shaft.

4. The head drum assembly of any preceding claim, wherein the inner race of the first bearing is bonded to the shaft.

5. A method of assembling a head drum assembly for a tape recorder, the head drum assembly including first and second separated bearings (140, 150) connecting a drum (110) to a shaft (130), the method being **characterised by**:
press-fitting the first bearing onto the shaft, so that an inner race of the bearing is in close contact with an outer surface of the shaft; and
press-fitting the first bearing into a recess in the drum, so that an outer race of the bearing is in close contact with an inner surface of the recess.

6. The method of claim 5, further comprising:
press-fitting the second bearing into a second recess in the drum, so that an outer race (142) of the second bearing is in close contact with an inner surface of the second recess, and concurrently engaging an inner race of the second bearing on the outer surface of the shaft in a sliding manner; and
providing a resilient body (160) between the inner race of the second bearing and a second drum press-fitted onto the shaft, so that the resilient body preloads the bearings.

7. A method of assembling a head drum assembly for a tape recorder, the head drum assembly including first and second separated bearings (140, 150) connecting a drum (110) to a shaft (130), the method being **characterised by**:
press-fitting the second bearing into a recess in the drum, so that an outer race (142) of the second bearing is in close contact with an inner surface of the recess, and engaging an inner race (141) of the second bearing on the outer surface of the shaft in a sliding manner; and
providing a resilient body (160) between the inner race of the second bearing and a second drum press-fitted onto the shaft, so that the resilient body preloads the bearings.

8. The method of claim 6 or claim 7, wherein the resilient body is a compression coil spring.

9. The method of any of claims 5 to 8, wherein an internal diameter of an or the inner race of the first bearing is larger than the diameter of the shaft.

10. The method of any of claims 5 to 9, wherein an internal diameter of an or the inner race of the second bearing is larger than the diameter of the shaft.

11. The method of any of claims 5 to 10, further comprising the step of bonding the inner race of the second bearing to the shaft.

12. A head drum assembly of a tape recorder comprising:
a rotary drum and a stationary drum which are engaged on a shaft one on the other and parallel to each other;
an upper bearing and a lower bearing which are located between the rotary drum and the shaft one on the other; and
a preload means for applying preloads to the upper and the lower bearings,
wherein the preload means includes a resilient body disposed on an axial core of the stationary drum to be located on an outer circumference of the shaft, the resilient body for upwardly pressing an inner race of the lower bearing.

13. The head drum assembly of claim 12, wherein the resilient body is a compression coil spring.

14. The head drum assembly of claim 12, wherein a diameter of an inner race of the upper bearing is larger than a diameter of the shaft.

15. The head drum assembly of claim 12, wherein a diameter of the inner race of the lower bearing is larger than a diameter of the shaft.

16. The head drum assembly of claim 12, wherein the inner race of the lower bearing is bonded to the shaft.

17. A method of applying preloads to bearings of a head drum assembly of a tape recorder, the head drum assembly including a rotary drum and a stationary drum which are engaged on a shaft one on the other and parallel to each other, and an upper bearing and a lower bearing which are disposed between the rotary drum and the shaft one on the other, the method comprising preloading an upper bearing and preloading a lower bearing , wherein the step of preloading the upper bearing comprises:
press-fitting downwardly the upper bearing so that an inner race of the upper bearing is pressed upward in a close contact with an outer circumference of the shaft; and
press-fitting downwardly the upper bearing so that an outer race of the upper bearing is pressed upward in a close contact with an inner circumference of a recess at a centre of upper side of the rotary drum.

18. A method of applying preload to bearings of a head drum assembly of a tape recorder, the head drum assembly including a rotary drum and a stationary drum which are engaged on a shaft one on the other and parallel to each other, and an upper bearing and a lower bearing which are disposed between the rotary drum and the shaft one on the other, the method comprising preloading an upper bearing and preloading a lower bearing, wherein the step of preloading the lower bearing comprises;
press-fitting upwardly the lower bearing so that an outer race of the lower bearing is pressed downwardly in a close contact with an inner circumference of a recess at a centre of under side of the rotary drum, and slidably engaging an inner race of the lower bearing on an outer circumference of the shaft; and
mounting a resilient body to be supported on the stationary drum, and press-fitting the stationary drum onto the shaft so that the resilient body presses an inner race of the lower bearing upwardly.

19. A method of applying preload to bearings of a head drum assembly of a tape recorder, the head drum assembly including a rotary drum and a stationary drum which are engaged on a shaft one on the other and parallel to each other, and an upper bearing and a lower bearing which are disposed between the rotary drum and the shaft one on the other, the method comprising preloading an upper bearing and preloading a lower bearing, wherein the step of preloading the upper bearing comprises;
press-fitting downwardly the upper bearing so that an inner race of the upper bearing is pressed upward in a close contact with an outer circumference of the shaft; and
press-fitting downwardly the upper bearing so that an outer race of the upper bearing is pressed upward in a close contact with an inner circumference of a recess at a centre of upper side of the rotary drum; and
wherein the step of preloading the lower bearing comprises;
press-fitting upwardly the lower bearing so that an outer race of the lower bearing is pressed downward in a close contact with an inner circumference of a recess at a centre of under side of the rotary drum, and concurrently engaging the lower bearing so that an inner race of the lower bearing slides along an outer circumference of the shaft; and
mounting a resilient body to be supported on the stationary drum, and press-fitting the stationary drum onto the shaft so that the resilient body presses an inner race of the lower bearing upwardly.

20. The method of claim 18 or claim 19, wherein the resilient body is a compression coil spring.

21. The method of claim 18 or claim 19, wherein a diameter of the inner race of the upper bearing is larger than a diameter of the shaft.

22. The method of claim 18 or claim 19, wherein a diameter of the inner race of the lower bearing is larger than a diameter of the shaft.

23. The method of claim 18 or claim 19, further comprising the step of bonding the inner race of the lower bearing to the shaft.

24. A head drum assembly for a tape recorder, comprising:
a shaft (130); and
a drum (110) connected to the shaft by first and second separated bearings (140, 150),
**characterised by** resilient preloading means (160) for applying preload to the first and second bearings.

25. A method of fabricating a head drum assembly, comprising:
fitting a first bearing (140) into a drum (110);
fitting a shaft (130) through the first bearing; and
fitting a second bearing (150) around the shaft,
**characterised by** including resilient preloading means (160) to preload the bearings.
